# EUROPÄISCHE PATENTSCHRIFT

(11) **EP 3 664 671 B1**
(45) Veröffentlichungstag und Bekanntmachung des Hinweises auf die Patenterteilung: **25.08.2021**
(21) Anmeldenummer: 18743428.7
(22) Anmeldetag: 10.07.2018
(51) Int. Cl.: A47J 43/07, A47J 43/06, A47J 43/08

(54) **ARBEITSGERÄT ZUM RÜHREN ODER ZERKLEINERN VON NAHRUNGSMITTELN**
IMPLEMENT FOR STIRRING OR COMMINUTING FOOD
USTENSILE POUR AGITER OU BROYER DES PRODUITS ALIMENTAIRES

(30) Priorität: 08.08.2017 DE 102017213778
(43) Veröffentlichungstag der Anmeldung: 17.06.2020
(73) Patentinhaber: De'Longhi Braun Household GmbH, 63263 Neu-Isenburg (DE)
(72) Erfinder: LI, Yang, 81245 München (DE); WIRTH, Dominik, 70182 Stuttgart (DE)
(74) Vertreter: Hoffmann Eitle
(86) Internationale Anmeldenummer: PCT/EP2018/068631
(87) Internationale Veröffentlichungsnummer: WO 2019/029928

(56) Entgegenhaltungen:
- WO-A1-2016/169883
- US-A- 5 863 118

## Beschreibung

### Technisches Gebiet

Die vorliegende Erfindung betrifft ein Arbeitsgerät zum Rühren oder Zerkleinern von Nahrungsmitteln, wie zum Beispiel einen Stabmixer.

### Stand der Technik

Herkömmliche Arbeitsgeräte zum Rühren oder Zerkleinern von Nahrungsmitteln sind beispielsweise aus der WO 96/10944 A1 oder der EP 0 724 857 A1 bekannt. Solche Arbeitsgeräte werden insbesondere bei der täglichen Zubereitung von Nahrungsmitteln eingesetzt, um beispielsweise Nahrungsmittel zu zerkleinern und zu vermischen. Eine Art von Arbeitsgeräten sind Stabmixer, welche in Haushalten, aber auch in professionellen Gastronomiebetrieben weite Verbreitung gefunden haben. Typischerweise besitzen solche Stabmixer ein Motorgehäuse, an das sich ein langgestrecktes Gehäuseteil, der sogenannte Schaft, anschließt, welcher wiederum an seinem Ende in eine Abschirmung mit einem unten offenen Ende, die sogenannte Glocke, übergeht. In dem Motorgehäuse ist ein Antriebsmotor angeordnet, der eine durch den Schaft geführte Arbeitswelle antreibt, an deren Ende im Bereich der Glocke üblicherweise ein Arbeitsteil, zum Beispiel ein Schneidmesser in Form einer sich schnell drehbaren Klinge, befestigt ist, um Flüssigkeiten zu mixen und feste Speisen zu zerkleinern.

Der Schaft übernimmt in der Regel die Adaption des Motorgehäuses an die Schaftbaugruppe und häufig die axiale sowie radiale Lagerung der Welle, welche zum Antrieb des Messers benötigt wird. Die Glocke hat in erster Linie eine Schutzfunktion, um das Hineingreifen in die Klinge durch den Anwender zu erschweren. Außerdem dient sie der Definition eines festen Abstands zwischen der Klinge und dem Boden des Bearbeitungsgefäßes (Topf, Rührbecher etc.), der Strömungsoptimierung um die Klinge herum sowie als Spritzschutz beim Eintauchen in Flüssigkeiten. Die Glocke ist dabei so dimensioniert, dass sie das Schneidmesser vollständig umschließt und, in Richtung der Achse der Arbeitswelle gesehen, eine bestimmte Strecke über das Ende der Welle beziehungsweise das Schneidmesser vorsteht.

Bei diesen auf dem Markt verfügbaren Geräten sind die Klingen immer in einer definierten horizontalen Position innerhalb der Glocke angebracht. Die Klingen sind fest auf einer Welle montiert und meist radial und axial starr gelagert. Somit ergibt sich ein vom Messer erreichbarer Bearbeitungsraum, der räumlich begrenzt ist. Durch die "normale" Auf- und AbBewegung des gesamten Stabmixers durch den Bediener wird dieser Raum nur unwesentlich größer. Spätestens beim Aufsetzen der Glocke auf den Boden wird der Raum unterhalb des Messers nicht durch dieses erreicht. Die Zerkleinerung erfolgt dann in aller Regel nur noch durch Strömungseffekte. Vorausgesetzt, es befindet sich genug Flüssigkeit um das Schneidgut herum, wird dieses mit der Strömung durch den Bearbeitungsraum gezogen und somit zerkleinert.

Außerdem kann sich bei den bekannten Stabmixern der Schaft im Betrieb immer wieder am Gefäßboden festsaugen, was für den Benutzer äußerst störend sein kann, da es einen erhöhten Kraftaufwand erfordert, um den Schaft wieder vom Boden zu lösen. Dies ist hauptsächlich durch die Position des Schneidmessers innerhalb der Glocke bedingt, denn die für die Funktion sinnvolle Geometrie des Messers sorgt für einen "Propellereffekt" und bewirkt ein Ansaugen des gesamten Schafts am Bearbeitungsboden.

Um entsprechende Nachteile zu vermeiden, wurde in der DE 197 50 813 A1 ein Stabmixer mit einer elastisch verformbaren Glocke vorgeschlagen. Weitere Ansätze werden in der DE 195 04 638 A1 verfolgt. Ein weiterer Stabmixer ist aus der US 6,398,403 B1 bekannt.

In der WO 2016/169883 A1 hat die Anmelderin ferner ein Arbeitsgerät vorgeschlagen, bei dem das Arbeitsteil in Bezug auf die Abschirmung beweglich ist.

### Darstellung der Erfindung

Dem Erfinder ist aufgefallen, dass, wenn zum Beispiel vergleichsweise harte Nahrungsmittel bearbeitet werden (zum Beispiel rohe Karotten), sich Nahrungsmittelstückchen direkt unterhalb die Wände der Glocke oder zwischen die Glocke und den Boden des Bearbeitungsbehälters bewegen und dort festsetzen können. In einer solchen Situation kann die Klinge die Nahrung nicht mehr erreichen, wodurch diese die Nahrungsmittel nicht mehr weiter verarbeiten kann. Bei Versuchen wurde ferner festgestellt, dass, um sicher zu stellen, dass solche Nahrungsmittelrückstände erreicht werden können, eine Kraft von bis zu 160 Newton ausgeübt werden muss, um die Wand der Glocke tief genug in die Nahrung hineinzudrücken, sodass das Messer die Nahrung erreichen kann. Für viele Benutzer ist dies nicht möglich.

Demgemäß wurde festgestellt, dass die Benutzer dazu tendieren, das Arbeitsgerät aus der Nahrung herauszuziehen und an anderer Stelle wieder einzutauchen. Andere, erfahrenere Benutzer, tendieren dazu, das gesamte Arbeitsgerät beziehungsweise den gesamten Mixer zu verschwenken oder um die Hochachse zu drehen, während sie das Arbeitsgerät herabdrücken, um dafür zu sorgen, dass die harten Nahrungsmittelstücke sich von ihrem Ort unterhalb der Wände der Glocke weg bewegen. Dies führt jedoch dazu, dass der Benutzer den gesamten Arm verschwenken muss, während er gleichzeitig einen (signifikanten) vertikalen Druck ausüben muss. Für den Benutzer ist dies umständlich, und es hat sich außerdem herausgestellt, dass die entsprechenden Ergebnisse der derartig bearbeiteten Nahrung deutlich verschlechtert sind.

Dem Erfinder ist ferner aufgefallen, dass das in der WO 2016/169883 A1 beschriebene System zwar dazu führt, dass das Messer näher an die Kante der Glocke gelangen kann, was die oben genannten Probleme in einigen Situationen lindern kann. Es wurde jedoch auch festgestellt, dass immer noch Situationen auftreten, in denen harte Nahrungsmittelstücke, die sich direkt unterhalb der Wände der Glocke befinden, nicht durch das Messer erreicht werden können und dass ein sehr hoher Druck oder eine manuelle Verdrehung des Geräts nötig ist, um das gewünschte Ziel zu erreichen.

Demgemäß hat die Erfindung die Aufgabe, zumindest einige der oben genannten Probleme zu lindern.

Die Erfindung wird durch Anspruch 1 definiert. Bevorzugte Ausführungsformen werden in den abhängigen Ansprüchen beschrieben.

Erfindungsgemäß weist ein Arbeitsgerät zum Rühren oder Zerkleinern von Nahrungsmitteln eine von einem Motor angetriebene drehbare Welle auf, an deren dem Motor gegenüberliegenden Ende ein Arbeitsteil vorgesehen ist. Bei einem solchen Arbeitsgerät kann es sich um einen Stabmixer oder ein Handrührgerät handeln. Der Motor ist typischerweise ein Elektromotor, es kann sich jedoch um eine beliebige andere Art von Motor handeln. Bei dem an dem Motor vorgesehenen Arbeitsteil kann es sich zum Beispiel um eine Klinge, ein Messer, ein Rührwerkzeug oder ein Knetwerkzeug (wie z.B. einen Rührstab) handeln. Allgemein gesagt kann es sich hierbei um eine beliebige Art von Arbeitsteil handeln, welches man bei der Verarbeitung von Nahrungsmitteln verwenden kann und welches hierfür drehend bzw. rotatorisch oszillierend eingesetzt wird.

Das Arbeitsgerät weist eine innere und eine äußere Baugruppe auf, die zumindest teilweise ein Gehäuse ("Schaft") des Arbeitsgeräts definieren. Bei dieser inneren und äußeren Baugruppe handelt es sich um Komponenten des Gehäuses. Typischerweise definieren diese eine längliche Außenform des Arbeitsgeräts. Die innere Baugruppe ist innerhalb der äußeren Baugruppe beweglich vorgesehen und kann bezüglich der äußeren Baugruppe verschoben werden, wie dies auch in der WO 2016/169883 A1 beschrieben wird. In der inneren Baugruppe ist die Welle drehbar gelagert, wobei sich das Arbeitsteil an einer Außenseite des Arbeitsgeräts befindet, sodass dieses mit Nahrungsmitteln interagieren kann. Anders gesagt liegt das Arbeitsteil frei.

Das Arbeitsteil ist jedoch innerhalb einer Abschirmung vorgesehen, die an der äußeren Baugruppe vorgesehen ist. Bei dieser Abschirmung (die auch als "Glocke" bezeichnet wird) handelt es sich um eine Vorrichtung, die dazu dient, ein unbeabsichtigtes Hereingreifen in das sich drehende Arbeitsteil zu vermeiden. Auch eine solche Glocke ist beispielsweise in der WO 2016/169883 A1 beschrieben. Diese Abschirmung ist an der äußeren Baugruppe vorgesehen, das heißt sie ist bevorzugt fest an dieser äußeren Baugruppe vorgesehen. Typischerweise kann die Abschirmung einstückig oder mehrteilig, dafür aber fest verbunden mit der äußeren Baugruppe vorgesehen sein. Hierdurch wird erzielt, dass eine Verschwenkung der drehbaren Welle bezüglich der äußeren Baugruppe notwendigerweise zu einer Verschwenkung der drehbaren Welle bezüglich der Abschirmung führt.

Die innere Baugruppe ist bezüglich der äußeren Baugruppe axial in Richtung der Welle bewegbar. Bei einer solchen Bewegung wird die innere Baugruppe, zusammen mit der von ihr gelagerten Welle, bezüglich der äußeren Baugruppe axial verschoben. Die innere Baugruppe ist bezüglich der äußeren Baugruppe so gelagert, dass eine axiale Bewegung der inneren Baugruppe in Bezug auf die äußere Baugruppe zusätzlich zu einer Drehbewegung der äußeren Baugruppe bezüglich der inneren Baugruppe führt. Durch eine entsprechende Lagerung der inneren Baugruppe bezüglich der äußeren Baugruppe kann durch eine Axialbewegung der inneren Baugruppe bezüglich der äußeren Baugruppe eine Verschwenkung der inneren Baugruppe bezüglich der äußeren Baugruppe erzielt werden. Dies führt dann dazu, dass sich auch die Abschirmung bezüglich des Arbeitsteils und gegenüber des an der inneren Baugruppe befestigen Motors bzw. Griffteils verschwenkt.

Im Vergleich zu der WO 2016/169883 A1 führt dies dazu, dass eine Teleskopbewegung der Welle durch eine Helixbewegung ersetzt wird. Wenn der Benutzer einen Druck auf das Arbeitsgerät ausübt, welcher axial gerichtet ist, wird das Arbeitsgerät komprimiert, was dazu führt, dass sich das Arbeitsteil vertikal innerhalb der Abschirmung bewegt, während aber gleichzeitig die Abschirmung selbst eine Drehung um die Hauptachse des Arbeitsgeräts durchführt. Dies führt dazu, dass etwaige harte Nahrungsmittelstücke, die zwischen der Abschirmung und dem Behälter, in dem dieses Arbeitsgerät verwendet wird, festhängen, "abgekratzt" bzw. herausgedreht oder herausgeschoben werden, was dazu führt, dass das Arbeitsteil auch diese Nahrungsstücke erreichen kann. Das Gleiche gilt u.U. auch für Rückstände, die an der Innenseite der Glocke festhängen.

Durch die Erfindung wird diese Drehbewegung automatisch durchgeführt, ohne dass der Benutzer irgendetwas "besonderes" durchführen muss. Diese Drehbewegung wird direkt durch die Axialbewegung erzeugt, welches die normale und intuitive Bewegungsrichtung für ein entsprechendes Arbeitsgerät wie zum Beispiel einen Stabmixer ist. Demgemäß werden die notwendigen Kräfte reduziert und es können auch unerfahrene Benutzer bessere Ergebnisse beim Rühren und Zerkleinern speziell von harten Nahrungsmitteln erzielen.

Bevorzugt wird, wenn das Arbeitsgerät ferner ein Vorspannelement (zum Beispiel in Form einer Feder) aufweist, welches gegen eine Verschiebung der inneren Baugruppe bezüglich der äußeren Baugruppe in axialer Richtung wirkt. Eine entsprechende Vorspanneinrichtung führt dazu, dass das Arbeitsgerät eine definierte Ruheposition hat, die es einnimmt, wenn keine axiale Kraft auf die innere und äußere Baugruppe ausgeübt wird. Ein entsprechendes Arbeitsgerät ist somit benutzerfreundlich und wenig wartungsintensiv, da die innere und äußere Baugruppe im Ruhezustand wenig Spiel aufweisen. Ferner wird keine separate Betätigung für das Rückstellen benötigt, da die Feder selbst als Rückstellelement dient. Besondere ist von Vorteil, wenn dieses Vorspannelement so wirkt, dass im Ruhezustand das Arbeitsteil den maximalen Abstand von der Öffnung der Glocke hat. Hierdurch wird die Wahrscheinlichkeit verringert, dass ein Benutzer versehentlich mit dem Arbeitsteil in Kontakt kommt, und das Ansaugen an den Behälterboden wird minimiert.

Bevorzugt wird ferner, wenn der maximale axiale "Hub" der inneren Baugruppe bezüglich der äußeren Baugruppe, und damit der maximale axiale Hub des Arbeitsgeräts, maximal 15 mm beträgt.

Bevorzugt wird, dass die Lagerung der inneren Baugruppe bezüglich der äußeren Baugruppe einen oder mehrere Vorsprünge an einer unter der inneren Baugruppe und der äußeren Baugruppe und eine oder mehrere entsprechende Führungen an der jeweils anderen unter der inneren Baugruppe und der äußeren Baugruppe aufweist, welche die eine oder mehreren Vorsprünge jeweils führen. Das heißt, der eine oder die mehreren Vorsprünge sind mit der zugehörigen Führung in Eingriff. Eine entsprechende Führung könnte zum Beispiel durch Vertiefungen in einer der jeweiligen Baugruppen ausgebildet sein. Es wäre jedoch auch denkbar, dass Führungsschienen vorgesehen sind, die sich von der jeweiligen Oberfläche der Baugruppe erstrecken.

Die einen oder mehreren Führungen erstrecken sich entlang der jeweiligen Baugruppe so, dass sie entlang ihrer Erstreckungsrichtung sowohl eine axiale Erstreckung als auch eine Erstreckung entlang des Umfangs haben. Dies führt dazu, dass eine Bewegung der einen oder mehreren Vorsprünge entlang der Führung(en) zu der Drehbewegung der äußeren Baugruppe bezüglich der inneren Baugruppe führt. Eine entsprechende Ausgestaltung des Arbeitsgeräts kann leicht implementiert werden und führt zu einem robusten und langlebigen Arbeitsgerät.

Diesbezüglich wird bevorzugt, dass die Führung eine Folge von sich abwechselnden axial ausgerichteten Abschnitten und geneigten Abschnitten aufweist. Ein entsprechendes Führungsprinzip ist zum Beispiel aus einem handelsüblichen Kugelschreiber bekannt. Dies führt dazu, dass eine erste axiale Verschiebung der inneren Baugruppe bezüglich der äußeren Baugruppe zu einer Verschwenkung des Arbeitsteils mit gleichzeitiger axialer Bewegung des Arbeitsteils führt, während ein Loslassen dazu führt, dass das Arbeitsteil lediglich axial zurückgeführt wird. Ein entsprechend ausgebildetes Arbeitsteil ist leicht einsetzbar und hat sich in der Praxis als praktisch und einfach handhabbar erwiesen.

Weiterhin wird bevorzugt, dass die Lagerung der inneren Baugruppe bezüglich der äußeren Baugruppe eines oder mehrere Verbindungselemente aufweist. Diese Verbindungselemente weisen jeweils einen ersten Verbindungspunkt mit der inneren Baugruppe und einen zweiten Verbindungspunkt mit der äußeren Baugruppe auf, an denen sie jeweils mit der inneren beziehungsweise der äußeren Baugruppe angebracht sind. Der erste Verbindungspunkt und der zweite Verbindungspunkt sind voneinander beabstandet. Das eine oder die mehreren Verbindungselemente haben eine hinreichende Steifigkeit und sind so ausgebildet, dass das Ausüben eines axialen Druck auf die innere Baugruppe zu einer Schwenkbewegung des einen oder der mehreren Verbindungselement führt, welche zu einer Drehbewegung der äußeren Baugruppe bezüglich der inneren Baugruppe führt. Entsprechende Verbindungselemente lassen sich leicht implementieren und haben sich auch als wenig wartungsintensiv und robust herausgestellt.

Es wird bevorzugt, dass die Verbindungselemente Stäbe aufweisen, die an der inneren und der äußeren Baugruppe befestigt sind, wobei sie verschwenkbar gelagert sind. Eine entsprechende Ausgestaltung ist einfach implementierbar.

Weiterhin wird bevorzugt, dass die Verbindungselemente Blattfedern aufweisen, die an der inneren Baugruppe und der äußeren Baugruppe befestigt sind. Diese Blattfedern weisen als Vorteil auf, dass kein separates Rückstellelement nötig ist oder ein solches schwächer ausgebildet werden kann, da die Blattfedern diese Rückstellfunktion zumindest in Teilen übernehmen.

Eine weitere bevorzugte Ausführungsform ist, dass an einer unter der inneren Baugruppe und der äußeren Baugruppe eines oder mehrere exzentrisch gelagerte Räder vorgesehen sind, die gegen eine Anlageoberfläche in Anlage kommen können oder gegen diese in der Anlage sind, die an der jeweils anderen unter der inneren Baugruppe und der äußeren Baugruppe vorgesehen ist und die sich so erstreckt, dass ihre Erstreckung eine Komponente hat, die entlang der Umfangsrichtung ist. Hierbei sind die Räder und die Anlageoberfläche so ausgebildet, dass beim axialen Verschieben der inneren Baugruppe bezüglich der äußeren Baugruppe diese Räder auf die Anlageoberfläche gedrückt werden und auf dieser aufgrund der exzentrischen Lagerung rollen. Durch dieses Rollen üben die Räder eine entlang der Umfangsrichtung gerichtete Kraft auf die Anlageoberfläche aus, die zu der Drehbewegung der äußeren Baugruppe bezüglich der inneren Baugruppe führt. Eine entsprechende Ausgestaltung des Arbeitsgeräts ist vergleichsweise robust, was unbeabsichtigte Verdrehungen der inneren Baugruppe bezüglich der äußeren Baugruppe angeht, weshalb es weniger wahrscheinlich ist, dass ein solches Arbeitsgerät aufgrund unsachgemäßer Benutzung beschädigt wird.

Hierbei wird bevorzugt, dass die Räder Zahnräder sind und dass die Anlageoberfläche Zahnelemente aufweist, die mit den Zähnen der Zahnräder in Eingriff sind oder in Eingriff treten können. Bei einer entsprechenden Kraftübertragung können sehr gut vergleichsweise große Kräfte übertragen werden.

Alternativ hierzu reicht es aus, wenn die Räder und die Anlageoberfläche eine Reibradverbindung haben oder eingehen können. Dies ist dahingehend von Vorteil, dass eine solche Ausbildung der Räder und der Anlageoberfläche in einer beliebigen Ausrichtung der Räder und der Anlageoberfläche zu einer Kraftübertragung führen kann, was sich gegenüber der Ausführungsform unterscheidet, bei der die Räder Zahnräder und die Anlageoberfläche Zahnelemente aufweist. Insofern ist ein solches Arbeitsgerät benutzerfreundlicher.

Es wird weiterhin bevorzugt, dass die innere Baugruppe und die äußere Baugruppe mittels eines Gewindes miteinander verbunden sind, welches derart ausgebildet ist, dass es bei einer axialen Bewegung der inneren Baugruppe bezüglich der äußeren Baugruppe zu einer Drehbewegung der äußeren Baugruppe bezüglich der inneren Baugruppe führt. Eine entsprechende Ausstattung des Arbeitsgeräts kann leicht implementiert werden und ist robust, da ein solches Arbeitsgerät nur wenig Spiel hat. Hierbei wird bevorzugt, dass das Gewinde ein Kugelgewinde, ein Rollgewinde oder ein Gleitgewinde ist oder ein solches aufweist. Entsprechende Gewinde sind gut charakterisiert und insofern gut implementierbar. Ein Kugelgewinde ist besonders leichtgängig und wird daher besonders bevorzugt.

### Kurze Beschreibung der Zeichnungen

- Figuren 1a und 1b: zeigen ein Arbeitsgerät nach dem Stand der Technik.
- Figuren 2a und 2b: zeigen die Funktionsweise eines erfindungsgemäßen Arbeitsgeräts gemäß der ersten Ausführungsform.
- Figuren 3a bis 3c: illustrieren das Arbeitsgerät gemäß der ersten Ausführungsform.
- Figur 4: zeigt ein Arbeitsgerät gemäß einer zweiten Ausführungsform.
- Figur 5: zeigt ein Arbeitsgerät gemäß einer dritten Ausführungsform.
- Figur 6: zeigt ein Arbeitsgerät gemäß einer vierten Ausführungsform.
- Figur 7: zeigt ein Arbeitsgerät gemäß einer fünften Ausführungsform.

### Detaillierte Beschreibung der Zeichnungen

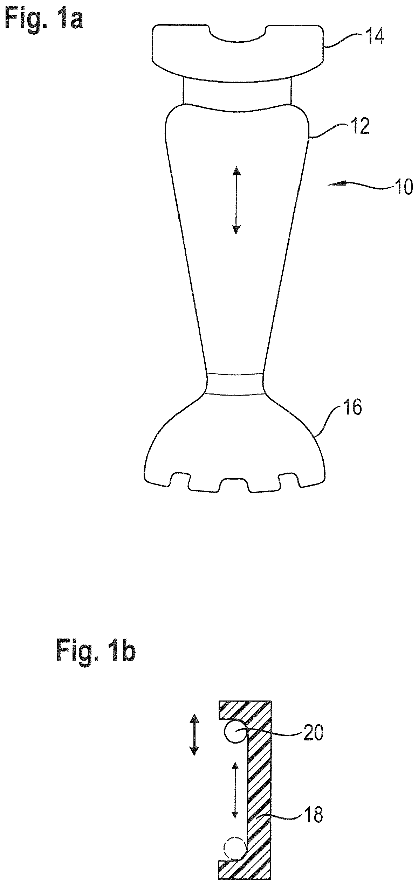

Figur 1a zeigt eine Gesamtansicht eines Arbeitsgeräts gemäß dem Stand der Technik, wie er zum Beispiel in der WO 2016/169883 A1 beschrieben wird.

Eine Axialbewegung - durch einen Pfeil angedeutet - der inneren Baugruppe 14 bezüglich der äußeren Baugruppe 12 führt dazu, dass sich eine innerhalb der Abschirmung 16 vorgesehenen Klinge (nicht dargestellt) des Arbeitsgeräts 10 axial verschiebt. Dies wird dadurch erzielt, dass zum Beispiel an der inneren Baugruppe 14 eine Führung 18 vorgesehen ist, innerhalb der ein Vorsprung 20 geführt wird, der an der äußeren Baugruppe 12 vorgesehen ist. Diese Führung 18 ist, wie in Figur 1b dargestellt, entlang der Axialrichtung ausgebildet.

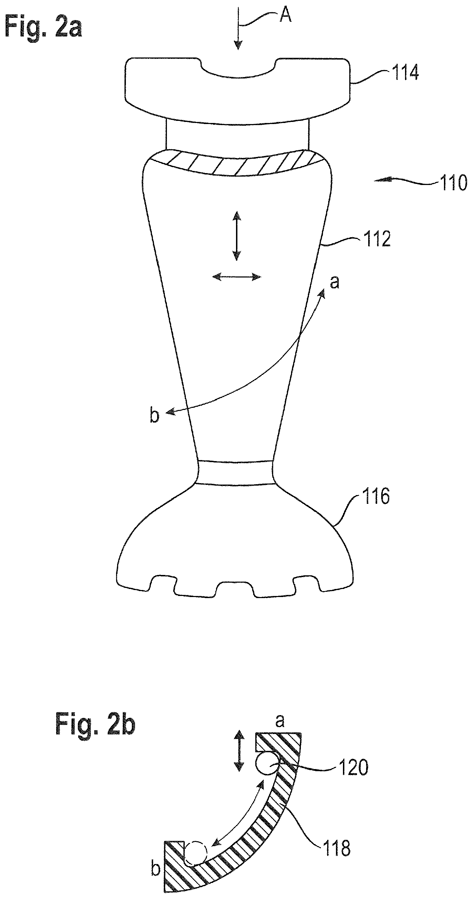

Eine erste Ausführungsform der Erfindung wird nun unter Bezugnahme auf Figur 2a und 2b beschrieben.

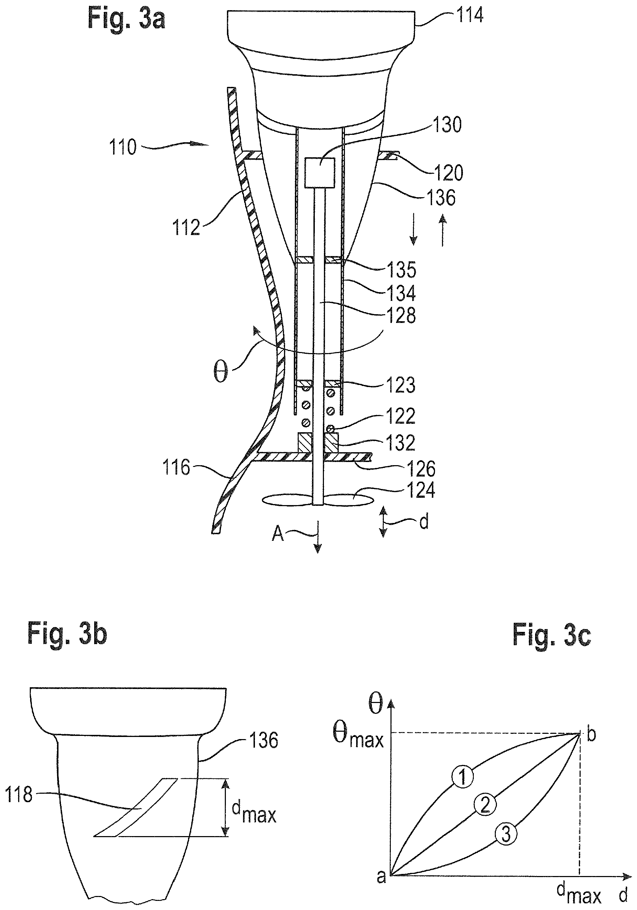

Figur 2a zeigt eine Gesamtansicht des Arbeitsgeräts 110. Dieses weist eine innere Baugruppe 114 und eine äußere Baugruppe 112 auf. Die innere Baugruppe 114 kann bezüglich der äußeren Baugruppe 112 verschoben werden, wie dies durch die Pfeile in der Figur 2a dargestellt ist. Hierbei wird durch eine später beschriebene Führung der inneren Baugruppe 114 bezüglich der äußeren Baugruppe 112 eine axiale Bewegung automatisch mit einer Verschwenkung beziehungsweise einer Drehbewegung um die Achse A überlagert. Diese entsprechende Bewegung ist durch den Pfeil, der die Punkte a und b verbindet, angedeutet. Durch eine entsprechende helikoidale Bewegung wird die innere Baugruppe 114 - zusammen mit einer Klinge 124 (siehe Figur 3a) - bezüglich der Abschirmung 116 spiralförmig bewegt.

Diese helikoidale Bewegung wird durch die Führung eines an der inneren Baugruppe 114 vorgesehenen Vorsprungs 120 innerhalb einer an der äußeren Baugruppe vorgesehenen helikoidalen Führung 118 erzielt, die in Figur 2b dargestellt ist. Eine axiale Bewegung der inneren Baugruppe 114 bezüglich der äußeren Baugruppe 112 führt dazu, dass der Vorsprung 120 sich entlang der Führung 118 bewegt und dass somit, wie in Figur 2b dargestellt ist, eine axiale Bewegung mit einer Verschwenkungsbewegung überlagert wird, was zu einer helikoidalen Bewegung der beiden Baugruppen 112, 114 zueinander führt.

Die Details der ersten Ausführungsform werden weiter in Figur 3a gezeigt. Wie in Figur 3a gezeigt ist, nimmt die innere Baugruppe 114 an ihrem oberen Ende ein Motorgerät auf, was über die Kupplung 130 die Welle 128 antreiben kann, sodass sich diese um ihre Achse dreht. An dem Ende dieser Welle 128, das sich innerhalb der Abschirmung 116 befindet, ist eine Klinge 124 als ein Beispiel eines Arbeitsteils vorgesehen. Die Welle 128 ist innerhalb einer Hülse 134 vorgesehen, die wiederum mit einem konusförmigen Zwischenabschnitt 136 der inneren Baugruppe verbunden ist. Die Welle 128 ist innerhalb der Hülse 134 über ein Lager 135 drehbar gelagert.

Wie bereits erwähnt befindet sich die Klinge 124 innerhalb der Abschirmung 116. Diese Abschirmung 116 ist ein Teil der äußeren Baugruppe 112. Um die Klinge 124 gegenüber dem Innenraum des Arbeitsgeräts 110 abzuschirmen, ist eine Abschirmung 126 vorgesehen, durch welche sich die Welle 128 erstreckt. Benachbart zu der Abschirmung 126 ist eine weitere Lagerung 132 vorgesehen. An der Innenseite der Hülse 134 ist ferner eine ringförmige Anlage 123 fest vorgesehen, gegen die eine Feder 122 als ein Beispiel eines Rückstellelements anliegt. Diese Feder 122 dient dazu, die Klinge 124 zu einer Richtung zum Gehäuse hin vorzuspannen, sodass es einer manuellen Interaktion zum Beispiel des Benutzers bedarf, der die innere Baugruppe 114 bezüglich der äußeren Baugruppe 112 nach unten drückt, um die Klinge 124 zur Öffnung der Abschirmung 116 hin zu bewegen.

Wie in Figur 3a dargestellt, weist die äußere Baugruppe 112 ferner Vorsprünge 120 an ihrer inneren Oberfläche auf. Diese Vorsprünge 120 stehen mit Führungsnuten 118, die in dem Zwischenabschnitt 136 vorgesehen sind, im Eingriff.

Diese Führungsnuten haben, wie in Figur 3b dargestellt ist, eine gekrümmte Ausbildung, sodass sie sowohl eine axiale Komponente als auch eine Umfangskomponente bezüglich der Achse A haben. Der Zwischenabschnitt 136 und die Führungsnut 118 sind so ausgebildet, dass der Vorsprung 120 in dieser Führungsnut 118 geführt wird, wenn eine Axialkraft auf die innere Baugruppe 114 ausgeübt wird, sodass sich diese bezüglich der äußeren Baugruppe 112 verschiebt.

Durch diese Verschiebung, die in axialer Richtung geschieht, wird der Vorsprung 120 innerhalb der Nut 118 bewegt, was zu einer Verschwenkung der inneren Baugruppe 114 bezüglich der äußeren Baugruppe führt.

Der maximale Hub wird hierbei in Figur 3a und 3b durch d bezeichnet. Bevorzugt beträgt dieser maximale Hub d maximal 15 mm, bevorzugt zwischen 5 und 15 mm. Die Neigung der Führung 118 bezüglich der Axialrichtung kann wie benötigt ausgewählt werden. Typischerweise beträgt der Winkel bezüglich der Axialrichtung jedoch weniger als 45° an jedem Punkt der Führung 118. Hierbei kann, wie in Figur 3c dargestellt ist, der Verschwenkungsweg ein progressiver Weg (in Figur 3c als "1" bezeichnet), ein linearer Weg (in Figur 3c als "2" bezeichnet) oder ein degressiver Weg (durch "3" bezeichnet) sein. In der Figur 3c bezeichnet a den Anfangspunkt der Bewegung, das heißt den Ruhezustands des Arbeitsgeräts, während b den Endzustand bezeichnet. θ bezeichnet den Drehwinkel. Eine entsprechende Bezeichnung wird auch in Figur 3a verwendet. dₘₐₓ bezeichnet die maximale Auslenkung. d bezeichnet die jeweilige Auslenkung, und θₘₐₓ bezeichnet die maximale Winkelverschwenkung.

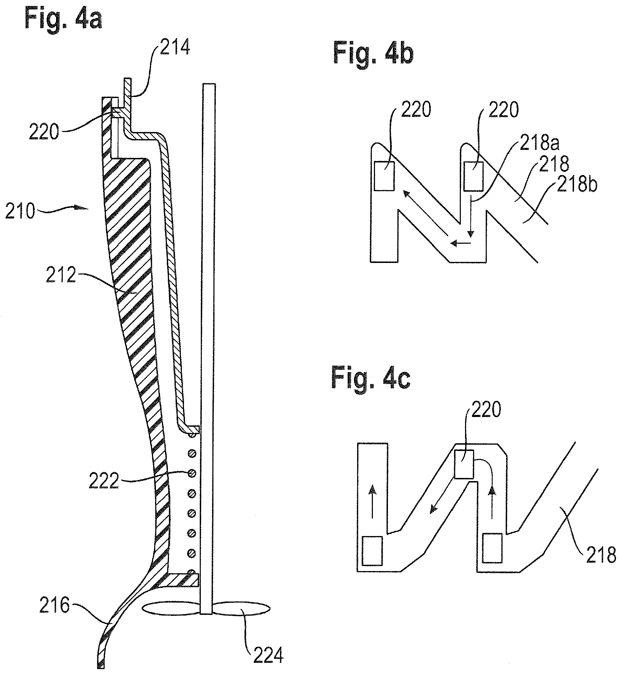

In Figur 4 wird eine zweite Ausführungsform der Erfindung gezeigt. Hierbei bezeichnet Figur 4a eine partielle Schnittansicht durch das Arbeitsgerät, während Figuren 4b und 4c Details der Nutführung zeigen.

Gemäß Figur 4a weist das Arbeitsgerät 210 wiederum eine innere Baugruppe 214 und eine äußere Baugruppe 212 auf, die zueinander durch eine Feder 222 hervorgespannt sind. Auch hierbei weist die äußere Baugruppe 212 eine Abschirmung 216 auf, die wiederum eine Klinge 224 als Beispiel eines Arbeitsteils abschirmt.

An der inneren Baugruppe 214 ist ein Vorsprung 220 in Form eines Nutsteins fest vorgesehen. In der äußeren Baugruppe 212 befindet sich eine hierzu passende Nut 218, die den Nutstein 220 führt.

Wie in Figur 4b dargestellt, bewegt sich der Nutstein 220 bei dem Aufbringen einer axialen Kraft auf die innere Baugruppe 214 rein axial nach unten. Durch eine Fase in der unteren Ecke der Nut wird der Nutstein dann in den diagonalen Teil der Nut geführt, was in Figur 4d durch einen horizontalen Pfeil bezeichnet wird. Wenn dann die axiale Kraft nicht mehr aufgebracht wird, wird der Nutstein 220 durch die Kraft der Feder 222 durch den diagonalen Teil 218b) bis ans Ende der Nut gebracht, wodurch eine axiale Bewegung inneren Baugruppe 214 verbunden mit einer Verschwenkungsbewegung der Abschirmung 216 bezüglich der inneren Baugruppe 214 erzielt wird. Hierdurch wird eine helikoidale Bewegung erzielt.

Des Weiteren ist es, wie in Figur 4c dargestellt wird, auch möglich, dass bei einem Aufbringen einer axialen Kraft auf die innere Baugruppe 214 bezüglich der äußeren Baugruppe 212 eine Verschwenkung stattfindet, während beim Rückstellen eine lediglich axiale Bewegung stattfindet.

Des Weiteren ist es auch möglich, dass der Nutstein an der äußeren Baugruppe 212 vorgesehen ist und die Führung an der inneren Baugruppe vorgesehen ist. Für Details dieses "Kugelschreibermechanismus" und die weiteren Details der zweiten Ausführungsform wird auf die erste Ausführungsform und auf die WO 2016/169883 A1 verwiesen.

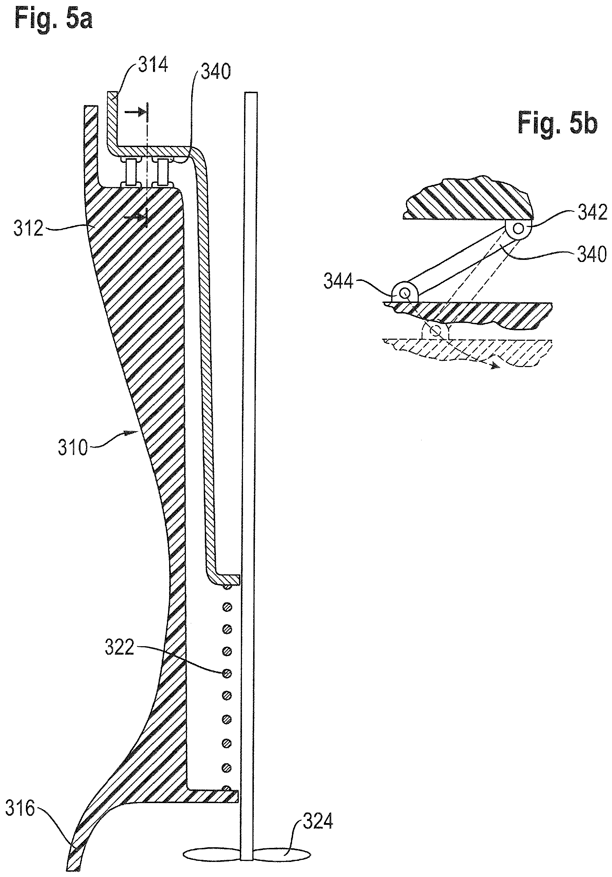

Figur 5 zeigt eine dritte Ausführungsform der Erfindung, die man als einen "Parallelogramm-Mechanismus" verstehen kann. Hierbei zeigt Figur 5a wiederum eine partielle Schnittansicht, während Figur 5b ein Detail der Führung zeigt. Zwischen einer inneren Baugruppe 314 und einer äußeren Baugruppe 312 des Arbeitsgeräts 310 ist wieder eine Feder 322 vorgesehen, welche die innere Baugruppe 314 bezüglich der äußeren Baugruppe 312 vorspannt. Des Weiteren ist auch hier eine Klinge 324 innerhalb einer Abschirmung 316 der äußeren Baugruppe 312 vorgesehen.

Wie insbesondere in Figur 5b zu sehen ist, sind zwischen der inneren Baugruppe 314 und der äußeren Baugruppe 312 Stäbe 340 vorgesehen. Diese Stäbe 340 sind mit der inneren Baugruppe 314 an einem ersten Verbindungspunkt 342 und mit der äußeren Baugruppe 312 an einem zweiten Verbindungspunkt 344 verschwenkbar verbunden. Durch das Ausüben eines axialen Drucks auf die innere Baugruppe 314 bezüglich der äußeren Baugruppe 312 werden die Stäbe 340 verschwenkt, wie dies in Figur 5b gestrichelt dargestellt ist. Hierdurch wird die innere Baugruppe 314 bezüglich der äußeren Baugruppe 312 verschwenkt.. Eine Rückstellung erfolgt durch die Feder 322. Des Weiteren ist es auch möglich, statt Stäben, die verkippt werden können, auch Federelemente in der Form von Blattfedern vorzusehen, die gleichzeitig die Führung, das Verkippen und die Rückstellkraft bewerkstelligen. Was die weiteren Details der dritten Ausführungsform angeht, wird auf die erste Ausführungsform und die WO 2016/169883 A1 verwiesen.

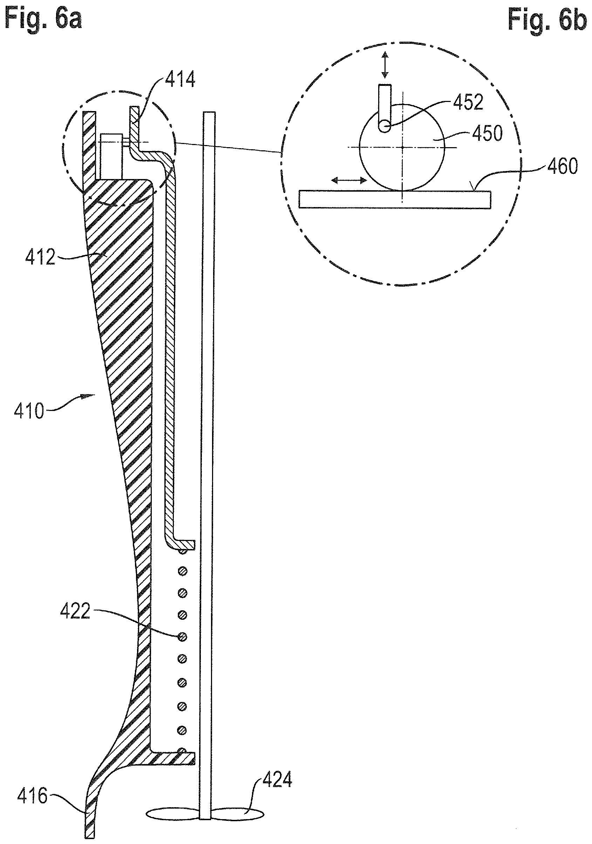

Figur 6 zeigt eine vierte Ausführungsform der Erfindung. Hierbei ist Figur 6a eine partielle Schnittansicht dieser Ausführungsform, während Figur 6b eine Detailansicht ist. Vorliegend weist eine innere Baugruppe 414 ein Rad 450 auf, das über eine Achse 452 exzentrisch gelagert ist (siehe Figur 6b). Dieses Rad 450 liegt an einer Anlageoberfläche 460 an, die entlang des Umfangs umlaufend in der äußeren Baugruppe 412 vorgesehen ist.

Durch das Ausüben einer axialen Kraft auf die innere Baugruppe 414 wird wiederum eine Kraft auf die Achse 452 ausgeübt. Durch den Eingriff beziehungsweise den Kontakt des Rades 450 mit der Anlageoberfläche 460 führt dies zu einer Verdrehung des Rades um dessen geometrische Mitte, die wiederum zu einem Drehmoment führt, welches auf die äußere Baugruppe 412 über die Anlageoberfläche 460 ausgeübt wird. Dies führt wiederum zu einem Verschwenken der äußeren Baugruppe 412 und der damit verbundenen Abschirmung 416 bezüglich der innerhalb der inneren Baugruppe 414. Auch hierbei wird eine Rückstellung des Arbeitsgeräts 410 über die Feder 422 erzielt.

Insbesondere kann hierbei für das Rad 450 ein Zahnrad und für die Anlageoberfläche 460 eine Anlageoberfläche verwendet werden, welche Zähne aufweist.

Bevorzugt werden mehrere Räder beziehungsweise mehrere Zahnräder verwendet, die vorzugsweise (punkt)symmetrisch vorgesehen sind, da ansonsten diese Ausgestaltung vergleichsweise instabil wäre und leicht verklemmen könnte.

Was die weiteren Details der vierten Ausführungsform angeht, wird auf die erste Ausführungsform und die WO 2016/169883 A1 verwiesen.

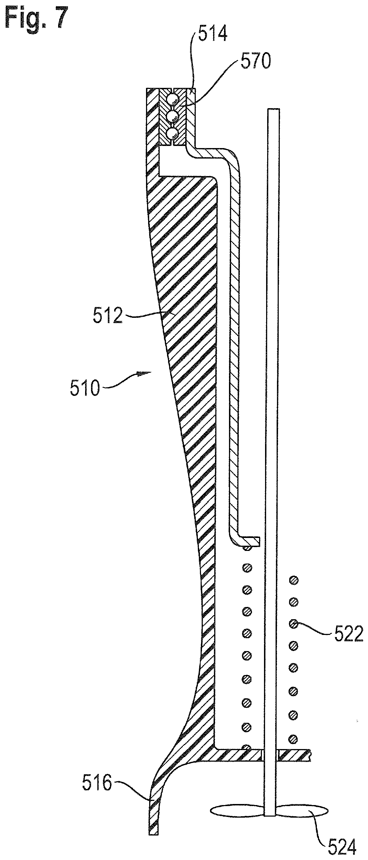

In Figur 7 wird eine fünfte Ausführungsform der Erfindung gezeigt. Hierbei ist zwischen der inneren Baugruppe 514 und der äußeren Baugruppe 512 ein Gewinde vorgesehen. Zum Beispiel kann dies in Form eines Kugelgewindetriebs 570 sein, wie dies dargestellt ist. Hierbei ist ein Gewindeeinsatz im Inneren der äußeren Baugruppe 512 vorgesehen, während ein entsprechendes Gegenstück an der Außenseite der inneren Baugruppe 514 vorgesehen ist. Bei Aufbringen einer axialen Kraft wird durch das Gewinde 570 eine rotatorische Bewegung erzeugt. Hierbei ist es wichtig, dass die Steigung des Gewindes groß genug ist, um nicht selbsthemmend zu sein. Durch eine entsprechende rotatorische Bewegung wird die Abschirmung 516 und die damit verbundene äußere Baugruppe 512 bezüglich der inneren Baugruppe 514, das ein in der Abschirmung 516 gelagerte Arbeitsteil 524 aufweist, verschwenkt. Auch hierbei wird eine Rückstellung über eine Feder 522 erzielt.

## Patentansprüche

1. Arbeitsgerät (110) zum Rühren oder Zerkleinern von Nahrungsmitteln mit:
einer von einem Motor angetriebene drehbare Welle (128), an deren dem Motor gegenüberliegenden Ende ein Arbeitsteil (124) vorgesehen ist,
einer inneren Baugruppe (114) und einer äußeren Baugruppe (112), die zumindest teilweise ein Gehäuse des Arbeitsgeräts definieren, wobei die innere Baugruppe (114) innerhalb der äußeren Baugruppe (112) beweglich vorgesehen ist und wobei die innere Baugruppe (114) die Welle (128) so drehbar lagert, dass sich das Arbeitsteil (124) an einer Außenseite des Arbeitsgeräts befindet, um Nahrungsmittel rühren oder zerkleinern zu können,
wobei das Arbeitsteil (124) innerhalb einer Abschirmung (116) vorgesehen ist, die an der äußeren Baugruppe vorgesehen ist,
wobei die innere Baugruppe (114) zusammen mit der von ihr gelagerten Welle (128) bezüglich der äußeren Baugruppe (112) axial in Richtung der Welle (128) bewegbar ist, **dadurch gekennzeichnet, dass** die innere Baugruppe (114) so bezüglich der äußeren Baugruppe (112) gelagert ist, dass eine axiale Bewegung der inneren Baugruppe (114) in Bezug auf die äußere Baugruppe (112) zu einer Drehbewegung der äußeren Baugruppe (114) bezüglich der inneren Baugruppe (112) führt.

2. Arbeitsgerät nach Anspruch 1,
wobei die Lagerung der inneren Baugruppe bezüglich der äußeren Baugruppe einen oder mehrere Vorsprünge (120) an einer unter der inneren Baugruppe und der äußeren Baugruppe und eine oder mehrere entsprechende Führungen (118) an der jeweils anderen unter der inneren Baugruppe und der äußeren Baugruppe aufweist, welche die einen oder mehreren Vorsprünge (120) jeweils führen,
wobei sich die eine oder mehreren Führungen (118) entlang der jeweiligen Baugruppe so erstrecken, dass sie entlang ihrer Erstreckungsrichtung sowohl eine axiale Erstreckung als auch eine Erstreckung entlang des Umfangs haben, so dass eine Bewegung der einen oder mehreren Vorsprünge (120) entlang von ihnen zu der Drehbewegung der äußeren Baugruppe (112) bezüglich der inneren Baugruppe (114) führt.

3. Arbeitsgerät nach Anspruch 2, wobei die Führung eine Folge von sich abwechselnden axial ausgerichteten Abschnitten (218a) und geneigten Abschnitten (218b) aufweist.

4. Arbeitsgerät nach einem der vorhergehenden Ansprüche,
wobei die Lagerung der inneren Baugruppe bezüglich der äußeren Baugruppe eines oder mehrere Verbindungselemente (340) aufweist,
wobei die Verbindungselemente (340) jeweils einen ersten Verbindungspunkt (342) mit der inneren Baugruppe und einen zweiten Verbindungspunkt (344) mit der äußeren Baugruppe aufweisen, an denen sie jeweils mit der inneren bzw. der äußeren Baugruppe verbunden sind,
wobei der erste Verbindungspunkt (342) und der zweite Verbindungspunkt (344) voneinander beabstandet sind und wobei das eine oder die mehreren Verbindungselemente eine solche Steifigkeit aufweisen, und so ausgebildet sind, dass das Ausüben eines axialen Drucks auf die innere Baugruppe zu einer Schwenkbewegung des einen oder der mehreren Verbindungselemente (340) führt, welche zu einer Drehbewegung der äußeren Baugruppe (312) bezüglich der inneren Baugruppe (314) führt.

5. Arbeitsgerät nach Anspruch 4, wobei die Verbindungselemente Stäbe aufweisen, die an der inneren Baugruppe und der äußeren Baugruppe befestigt sind, wobei die Stäbe verschwenkbar gelagert sind.

6. Arbeitsgerät nach Anspruch 4 oder 5, wobei die Verbindungselemente Blattfedern aufweisen, die an der inneren Baugruppe und der äußeren Baugruppe befestigt sind.

7. Arbeitsgerät nach einem der vorhergehenden Ansprüche,
wobei an einer unter der inneren Baugruppe und der äußeren Baugruppe eines oder mehrere exzentrisch gelagerte Räder (450) vorgesehen sind, die gegen eine Anlageoberfläche (460) in Anlage kommen können oder gegen diese in Anlage sind, die an der jeweils anderen unter der inneren Baugruppe und der äußeren Baugruppe vorgesehen ist und die sich so erstreckt, dass ihre Erstreckung eine Komponente hat, die entlang der Umfangsrichtung ist,
wobei die Räder (450) bei einer axialen Bewegung der inneren Baugruppe in Bezug auf die äußere Baugruppe auf der Anlageoberfläche (460) rollen, so dass sie eine entlang der Umfangsrichtung gerichtete Kraft auf die Anlageoberfläche ausüben, die zu der Drehbewegung der äußeren Baugruppe bezüglich der inneren Baugruppe führt.

8. Arbeitsgerät nach Anspruch 7,
wobei die Räder Zahnräder sind und die Anlageoberfläche Zahnelemente aufweist, die mit den Zähnen der Zahnräder in Eingriff sind oder in Eingriff treten können.

9. Arbeitsgerät nach Anspruch 7,
wobei die Räder und die Anlageoberfläche eine Reibradverbindung haben oder eingehen können.

10. Arbeitsgerät nach einem der vorhergehenden Ansprüche,
wobei die innere Baugruppe und die äußere Baugruppe mittels eines Gewindes (570) miteinander verbunden sind, welches derart ausgebildet ist, dass es bei einer axialen Bewegung der inneren Baugruppe bezüglich der äußeren Baugruppe zu einer Drehbewegung der äußeren Baugruppe bezüglich der inneren Baugruppe führt,
wobei das Gewinde bevorzugt ein Kugelgewinde, ein Rollgewinde oder ein Gleitgewinde aufweist.

## Claims

1. Implement (110) for stirring or comminuting food having:
a rotatable shaft (128) driven by a motor, with a working part (124) provided at the end opposite the motor,
an inner assembly (114) and an outer assembly (112) which at least partially define a housing of the implement, wherein the inner assembly (114) is moveable within the outer assembly (112)and wherein the shaft (128) is mounted rotatably on the inner assembly (114) in such a way that the working part (124) is located on an outer side of the implement, enabling it to stir or comminute food,
wherein the working part (124) is provided within a shield (116) which is provided on the outer assembly,
wherein the inner assembly (114) together with the shaft (128) mounted thereon is axially moveable relative to the external assembly (112) in the direction of the shaft (128), **characterised in that** the inner assembly (114) is mounted in such a way relative to the outer assembly (112) that an axial movement of the inner assembly (114) relative to the outer assembly (112) leads to a rotational movement of the outer assembly (114) relative to the inner assembly (112) .

2. Implement according to claim 1,
wherein the mounting of the inner assembly relative to the outer assembly comprises one or more projections (120) on either the inner assembly or the outer assembly and one or more corresponding guides (118) on the other assembly which in each case guide the one or more projections (120),
wherein the one or more guides (118) extend along the respective assembly in such a way that they extend both axially and also circumferentially along their direction of extension, so that a movement of the one or more projections (120) along said guides leads to the rotational movement of the outer assembly (112) relative to the inner assembly (114).

3. Implement according to claim 2, wherein the guide has a sequence of alternating axially oriented sections (218a) and inclined sections (218b).

4. Implement according to one of the preceding claims,
wherein the mounting of the inner assembly relative to the outer assembly comprises one or more connecting elements (340),
wherein the connecting elements (340) in each case have a first connection point (342) with the inner assembly and a second connection point (344) with the outer assembly at which they are each connected, respectively, to the inner or outer assembly,
wherein the first connection point (342) and the second connection point (344) are spaced apart from each other and wherein the one or more connecting elements are so stiff and are configured such that the exertion of an axial pressure on the inner assembly leads to a swivelling movement of the one or more connecting elements (340) which leads to a rotational movement of the outer assembly (312) relative to the inner assembly (314).

5. Implement according to claim 4, wherein the connecting elements comprise rods which are fastened to the inner assembly and the outer assembly, wherein the rods are mounted so as to swivel.

6. Implement according to claim 4 or 5, wherein the connecting elements comprise leaf springs which are fastened to the inner assembly and the outer assembly.

7. Implement according to one of the preceding claims,
wherein eccentrically mounted wheels (450) are provided on either the inner assembly or the external assembly which can come into contact with a contact surface (460) provided on the other assembly, or are in contact with said contact surface, and extend in such a way that their extension has a component which extends in a circumferential direction,
wherein in the event of an axial movement of the inner assembly relative to the outer assembly the wheels (450) roll on the contact surface (460) so that they exert a force directed along the circumferential direction which leads to the rotational movement of the external assembly relative to the inner assembly.

8. Implement according to claim 7,
wherein the wheels are gearwheels and the contact surface has tooth elements which engage with, or can come into engagement with, the teeth of the gearwheel.

9. Implement according to claim 7,
wherein the wheels and the contact surface have, or can enter into, a friction wheel connection.

10. Implement according to one of the preceding claims,
wherein the inner assembly and the outer assembly are connected with each other by means of a thread (570) which is configured in such a way that in the event of an axial movement of the inner assembly relative to the outer assembly it leads to a rotational movement of the outer assembly relative to the inner assembly,
wherein the thread is preferably a ball thread, a roller thread or a sliding thread.

## Revendications

1. Outil de travail (110) pour agiter ou broyer des produits alimentaires avec :
un arbre (128) rotatif entraîné par un moteur, au niveau de l'extrémité opposée au moteur duquel une partie de travail (124) est prévue,
un assemblage intérieur (114) et un assemblage extérieur (112) qui définissent au moins partiellement un boîtier de l'outil de travail, dans lequel l'assemblage intérieur (114) est prévu de manière mobile à l'intérieur de l'assemblage extérieur (112) et dans lequel l'assemblage intérieur (114) stocke l'arbre (128) de manière à pouvoir tourner de sorte que la partie de travail (124) se trouve au niveau d'un côté extérieur de l'outil de travail afin de pouvoir agiter ou broyer des produits alimentaires,
dans lequel la partie de travail (124) est prévue à l'intérieur d'une protection (116) qui est prévue au niveau de l'assemblage extérieur,
dans lequel l'assemblage intérieur (114) est mobile conjointement avec l'arbre (128) stocké par celui-ci par rapport à l'assemblage extérieur (112) axialement en direction de l'arbre (128), **caractérisé en ce que** l'assemblage intérieur (114) est stocké par rapport à l'assemblage extérieur (112) de sorte qu'un mouvement axial de l'assemblage intérieur (114) par rapport à l'assemblage extérieur (112) mène à un mouvement de rotation de l'assemblage extérieur (114) par rapport à l'assemblage intérieur (112).

2. Outil de travail selon la revendication 1,
dans lequel le stockage de l'assemblage intérieur par rapport à l'assemblage extérieur présente une ou plusieurs saillies (120) au niveau d'un parmi l'assemblage intérieur et l'assemblage extérieur et un ou plusieurs guidages (118) correspondants au niveau de l'autre respectivement parmi l'assemblage intérieur et l'assemblage extérieur qui guident respectivement une ou plusieurs saillies (120),
dans lequel les un ou plusieurs guidages (118) s'étendent le long de l'assemblage respectif de sorte qu'ils aient le long de leur sens d'étendue non seulement une étendue axiale mais aussi une étendue le long de la périphérie de sorte qu'un mouvement des une ou plusieurs saillies (120) mène le long de ceux-ci au mouvement de rotation de l'assemblage extérieur (112) par rapport à l'assemblage intérieur (114).

3. Outil de travail selon la revendication 2, dans lequel le guidage présente une suite de sections orientées axialement (218a) et de sections inclinées (218b) en alternance.

4. Outil de travail selon l'une quelconque des revendications précédentes,
dans lequel le stockage de l'assemblage intérieur par rapport à l'assemblage extérieur présente un ou plusieurs éléments de liaison (340),
dans lequel les éléments de liaison (340) présentent respectivement un premier point de liaison (342) avec l'assemblage intérieur et un second point de liaison (344) avec l'assemblage extérieur, au niveau desquels ils sont reliés respectivement à l'assemblage intérieur ou à l'assemblage extérieur,
dans lequel le premier point de liaison (342) et le second point de liaison (344) sont espacés l'un de l'autre et dans lequel l'un ou les plusieurs éléments de liaison présentent une telle rigidité et sont réalisés de sorte que l'exercice d'une pression axiale sur l'assemblage intérieur mène à un mouvement de pivotement des un ou plusieurs éléments de liaison (340), lequel mène à un mouvement de rotation de l'assemblage extérieur (312) par rapport à l'assemblage intérieur (314).

5. Outil de travail selon la revendication 4, dans lequel les éléments de liaison présentent des barres qui sont fixées à l'assemblage intérieur et à l'assemblage extérieur, dans lequel les barres sont stockées de manière pivotante.

6. Outil de travail selon la revendication 4 ou 5, dans lequel les éléments de liaison présentent des ressorts à lames qui sont fixés à l'assemblage intérieur et à l'assemblage extérieur.

7. Outil de travail selon l'une quelconque des revendications précédentes,
dans lequel au niveau d'un parmi l'assemblage intérieur et l'assemblage extérieur une ou plusieurs roues (450) stockées de manière excentrique sont prévues, lesquelles peuvent venir en appui contre une surface d'appui (460) ou sont en appui contre celle-ci, laquelle est prévue sur l'autre respectivement parmi l'assemblage intérieur et l'assemblage extérieur et laquelle s'étend de sorte que son étendue présente un composant qui est le long du sens périphérique,
dans lequel les roues (450) roulent lors d'un mouvement axial de l'assemblage intérieur par rapport à l'assemblage extérieur sur la surface d'appui (460) de sorte qu'elles exercent une force dirigée le long du sens périphérique sur la surface d'appui qui mène au mouvement de rotation de l'assemblage extérieur par rapport à l'assemblage intérieur.

8. Outil de travail selon la revendication 7,
dans lequel les roues sont des roues dentées et la surface d'appui présente des éléments dentés qui sont en prise ou peuvent venir en prise avec les dents des roues dentées.

9. Outil de travail selon la revendication 7,
dans lequel les roues et la surface d'appui peuvent présenter ou établir une liaison de roue de friction.

10. Outil de travail selon l'une quelconque des revendications précédentes,
dans lequel l'assemblage intérieur et l'assemblage extérieur sont reliés entre eux au moyen d'un filetage (570) qui est réalisé de manière à mener lors d'un mouvement axial de l'assemblage intérieur par rapport à l'assemblage extérieur à un mouvement de rotation de l'assemblage extérieur par rapport à l'assemblage intérieur,
dans lequel le filetage présente de préférence un filetage sphérique, un filetage roulant ou filetage glissant.
